# EUROPÄISCHE PATENTSCHRIFT

(11) **EP 1 678 975 B1**
(45) Veröffentlichungstag und Bekanntmachung des Hinweises auf die Patenterteilung: **30.05.2007**
(21) Anmeldenummer: 04791255.5
(22) Anmeldetag: 19.10.2004
(51) Int. Cl.: H04Q 7/36, H04L 12/28, H04L 12/56

(54) **Verfahren zum betrieben zweier Funkkommunkationssysteme**
Method for operating two radio communication systems
Procédé pour faire fonctionner deux systèmes de communication radio

(30) Priorität: 31.10.2003 DE 10350890
(43) Veröffentlichungstag der Anmeldung: 12.07.2006
(73) Patentinhaber: SIEMENS AKTIENGESELLSCHAFT, 80333 München (DE)
(72) Erfinder: LI, Hui, Beijing 100102 (CH); SCHULZ, Egon, 80993 München (DE); YU, Dan, Xi,Lu 15,Haidian Distr.; 100085 BEIJING (CN)
(86) Internationale Anmeldenummer: PCT/EP2004/052579
(87) Internationale Veröffentlichungsnummer: WO 2005/043947

(56) Entgegenhaltungen:
- EP-A- 1 207 654
- US-A1- 2002 136 183
- US-A1- 2002 173 272

## Beschreibung

Die Erfindung betrifft ein Verfahren zum Betreiben zweier Funkkommunikationssysteme mit zumindest teilweise überlappenden Funkabdeckungsbereichen. Weiterhin betrifft die Erfindung eine Einrichtung in einem Funkkommunikationssystem zur Durchführung des Verfahrens.

In Funkkommunikationssystemen werden Informationen (beispielsweise Sprache, Bildinformation, Videoinformation, SMS (Short Message Service), MMS (Multimedia Messaging Service) oder andere Daten) mit Hilfe von elektromagnetischen Wellen über eine Funkschnittstelle zwischen sendender und empfangender Funkstation übertragen. Bei den Funkstationen kann es sich hierbei je nach konkreter Ausgestaltung des Funkkommunikationssystems um verschiedenartige teilnehmerseitige Funkstationen, Funkzugangspunkte oder Basisstationen handeln. Das Abstrahlen der elektromagnetischen Wellen erfolgt dabei mit Trägerfrequenzen, die in dem für das jeweilige System vorgesehenen Frequenzband liegen.

Funkkommunikationssysteme können sich z.B. durch ihre Funkzugangstechnologie oder Übertragungsverfahren, durch Netzwerksbetriebssysteme und Netzwerkprotokolle unterscheiden. Beispiele für Funkkommunikationssysteme sind Systeme nach den Standards GSM (Global System for Mobile Communications), GPRS (General Packet Radio Service), EDGE (Enhanced Data Rates for GSM Evolution), TSM (Time Division Synchronous Code Division Multiple Access), DECT (Digital European Cordless Telephony), IS95 (Interim Standard No. 95), cdma2000, UMTS (Universal Mobile Telecommunications System), IEEE 802.11 und Bluetooth, sowie Systeme der vierten Generation.

Funkkommunikationssysteme sind oftmals als zellulare Systeme z.B. nach dem Standard GSM oder UMTS mit einer Netzinfrastruktur bestehend z.B. aus Basisstationen, Einrichtungen zur Kontrolle und Steuerung der Basisstationen und weiteren netzseitigen Einrichtungen ausgebildet. Für das zellulare GSM-Mobilfunksystem werden Frequenzen bei 900, 1800 und 1900 MHz genutzt. Außer diesen weiträumig organisierten (supralokalen) zellularen, hierarchischen Funknetzen existieren drahtlose lokale Netze (WLANs, Wireless Local Area Networks) mit einem in der Regel räumlich deutlich stärker begrenzten Funkabdeckungsbereich. Die von den WLAN-Funkzugangspunkten (AP: Access Point) abgedeckten Zellen sind mit einem Durchmesser von bis zu einigen hundert Metern im Vergleich zu üblichen Mobilfunkzellen klein. Beispiele verschiedener Standards für WLANs sind HiperLAN, DECT, IEEE 802.11, Bluetooth und WATM. Allgemein wird für WLANs der nicht lizenzierte Frequenzbereich um 2,4 GHz genutzt, wobei die Datenübertragungsraten bei bis zu 11 Mbit/s liegen. Künftige WLANs können im 5 GHz Bereich betrieben werden und Datenraten von über 50 Mbit/s erreichen. Somit stehen den Teilnehmern der WLANs Datenraten zur Verfügung, die erheblich höher liegen, als diejenigen, die von der dritten Mobilfunkgeneration (z.B. UMTS) angeboten werden.

In vielen WLANs können teilnehmerseitige Funkstationen über einen oder mehrere Sprünge (Hop bzw. Multihop) direkt miteinander kommunizieren. Weiterhin können sie über WLAN-Funkzugangspunkte, welche in der Regel an andere Kommunikationssysteme angeschlossen sind, Informationen versenden und empfangen. Die Anbindung einer teilnehmerseitigen Funkstation an einen Funkzugangspunkt kann entweder direkt oder über Sprünge mit einer Datenweiterleitung über andere Funkstationen erfolgen.

Verschiedene Funkkommunikationssysteme können örtlich überlappende Funkabdeckungsbereiche aufweisen. Somit kann eine geeignete teilnehmerseitige Funkstation gleichzeitig oder nacheinander innerhalb mehrerer Funkkommunikationssysteme kommunizieren. Stehen mehreren Funkkommunikationssystemen gemeinsame Funkressourcen zur Verfügung, so können aus einer mangelhaften Abstimmung zwischen den Funkkommunikationssystemen unerwünschte Interferenzen oder eine unvollständige Ausnutzung der zur Verfügung stehenden Funkressourcen resultieren.

Das Dokument EP 1 207 654 A2 beschreibt die Koordination zwischen einem IEEE 802.11 System und einem Bluetooth-System. Der Funkzugangspunkt des WLAN sendet ein CTS-Signal (CTS: Clear To Send) gemäß dem WLAN-Standard, welches den Funkstationen des WLAN anzeigt, dass die Kommunikation innerhalb des WLAN für eine bestimmte Zeitspanne unterbrochen wird, während die Funkstationen des Bluetooth-Systems während dieser Zeitspanne kommunizieren dürfen.

Die Dokumente US 2002/0136183 A1 und US 2002/0173272 A1 beschreiben ein WLAN und ein Bluetooth-System, welche überlappen und die gleiche Funkfrequenz verwenden. Es existiert eine Kontrolleinrichtung, welche bestimmt, ob Kollisionen zwischen den Signalen der verschiedenen Systeme zu erwarten sind. Werden Kollisionen erwartet, wird ein "jamming signal" an die Funkstationen des WLAN gesendet. Dieses jamming signal" hat zur Folge, dass die WLAN-Funkstationen das Funkmedium als belegt ansehen und daher ihre Signalversendung aufschieben, so dass die Funkkanäle für das Bluetooth-System frei sind.

Der Erfindung liegt die Aufgabe zugrunde, ein Verfahren zum Betreiben zweier hinsichtlich ihrer Funkabdeckung sich zumindest teilweise überlappender Funkkommunikationssysteme aufzuzeigen, welches eine Abstimmung der Kommunikation innerhalb der beiden Funkkommunikationssysteme ermöglicht. Weiterhin soll eine Einrichtung in einem Funkkommunikationssystem zur Durchführung des Verfahrens aufgezeigt werden.

Diese Aufgabe wird hinsichtlich des Verfahrens durch ein Verfahren mit den Merkmalen des Anspruchs 1 und durch eine Einrichtung mit den Merkmalen des Anspruchs 11 gelöst.

Vorteilhafte Ausgestaltungen und Weiterbildungen sind Gegenstand von Unteransprüchen.

Das Verfahren dient zum Betreiben eines ersten und eines zweiten Funkkommunikationssystems, wobei das zweite Funkkommunikationssystem eine Mehrzahl von Funkstationen umfasst. Die Funkabdeckungsbereiche des ersten und des zweiten Funkkommunikationssystems überlappen zumindest teilweise. Erfindungsgemäß wird von dem ersten Funkkommunikationssystem eine Nachricht mit Anweisungen zur Organisation der Kommunikation innerhalb des zweiten Funkkommunikationssystems an zumindest einen Teil der Funkstationen des zweiten Funkkommunikationssystems versendet.

Durch die Nachricht des ersten Funkkommunikationssystems wird zumindest eine Funkstation des zweiten Funkkommunikationssystems angewiesen, in der Nachricht enthaltene Informationen betreffend die Organisation der Kommunikation innerhalb des zweiten Funkkommunikationssystems an weitere Funkstationen des zweiten Funkkommunikationssystems weiterzuleiten. Hierbei können durch die mindestens eine Funkstation des zweiten Funkkommunikationssystems die Anweisungen des ersten Funkkommunikationssystems vollständig oder teilweise direkt an andere Funkstationen des zweiten Funkkommunikationssystems weitergeleitet werden. Es ist jedoch auch möglich, dass vor der Versendung der Informationen durch die mindestens eine Funkstation eine Überarbeitung der Anweisungen durch die mindestens eine Funkstation erfolgt. Insbesondere werden Anweisungen betreffend zeitliche Vorgaben durch das erste Funkkommunikationssystem an Funkstationen des zweiten Funkkommunikationssystems weitergegeben.

Bei den Funkkommunikationssystemen kann es sich um gleichartige oder auch um verschiedenartige Funkkommunikationssysteme handeln. Wie oben bereits ausgeführt, können sich Funkkommunikationssysteme z.B. durch ihre Funkzugangstechnologie oder Übertragungsverfahren, durch Netzwerksbetriebssysteme oder Netzwerkprotokolle unterscheiden. Es ist möglich, dass die beiden Funkkommunikationssysteme der Erfindung miteinander über eine geeignete Schnittstelle verbunden sind. Bei dem ersten Funkkommunikationssystem der Erfindung kann es sich z.B. um ein zellulares Funkkommunikationssystem und bei dem zweiten Funkkommunikationssystem um ein WLAN handeln.

Die Nachrichten mit Anweisungen zur Organisation der Kommunikation werden vorzugsweise an solche Funkstationen des zweiten Funkkommunikationssystems gesendet, welche eine Funkschnittstelle zur Kommunikation innerhalb des ersten und eine Funkschnittstellen zur Kommunikation innerhalb des zweiten Funkkommunikationssystems aufweisen. Diese Funkstationen können somit sowohl Bestandteil des ersten als auch des zweiten Funkkommunikationssystems sein. Diejenigen Funkstationen, an welche das erste Funkkommunikationssystem die Nachricht versendet, können von diesem nach bestimmten Kriterien ausgewählt werden, wobei die Kriterien in der Regel von der Art bzw. dem Inhalt der Anweisungen abhängen.

Die Anweisungen betreffen die Organisation der Kommunikation innerhalb des zweiten Funkkommunikationssystems. Unter einer Kommunikation innerhalb des zweiten Funkkommunikationssystems wird das Versenden bzw. Empfangen von Nachrichten in Form von Nutz- und/oder Signalisierungsinformationen durch Funkstationen des zweiten Funkkommunikationssystems verstanden, wobei die Übertragungen gemäß der jeweiligen Ausgestaltung des zweiten Funkkommunikationssystems erfolgt. Beispiele hierfür sind der Austausch von Nachrichten zwischen Funkstationen des zweiten Funkkommunikationssystems und die Versendung bzw. der Empfang von Nachrichten durch Funkstationen des zweiten Funkkommunikationssystems an bzw. von Kommunikationsendgeräten eines anderen Kommunikationssystems.

Die Versendung der Anweisungen durch das erste Funkkommunikationssystem zeigt, dass das erste Funkkommunikationssystem die Kompetenz hat, grundlegend in den Verlauf der Kommunikation innerhalb des zweiten Funkkommunikationssystems einzugreifen. Das zweite Funkkommunikationssystem befolgt entsprechend die ergangenen Anweisungen. Vorteilhafterweise erfolgt die Versendung der Anweisungen durch das erste Funkkommunikationssystem wiederholt, insbesondere periodisch, wobei sich der Inhalt der Anweisungen von Versendung zu Versendung ändern kann. Das beschriebene Verfahren kann auch auf eine Vielzahl von Funkkommunikationssystemen angewandt werden, so dass zum Beispiel ein erstes Funkkommunikationssystem Anweisungen zur Organisation der Kommunikation an mehrere andere Funkkommunikationssysteme versendet.

In Weiterbildung der Erfindung betreffen die Anweisungen zeitliche Vorgaben für die Kommunikation innerhalb des zweiten Funkkommunikationssystems. Hierdurch kann das erste Funkkommunikationssystem zum Beispiel den Aufbau einer Zeitrahmenstruktur vorgeben, oder auch bestimmte Nutzungsarten von Zeitabschnitten innerhalb des zweiten Funkkommunikationssystems.

Einer Ausgestaltung der Erfindung gemäß betreffen die Anweisungen mindestens einen Zeitabschnitt für die Kommunikation innerhalb des zweiten Funkkommunikationssystems aufgrund eines zentral gesteuerten Funkzugriffsverfahrens und mindestens einen Zeitabschnitt für die Kommunikation innerhalb des zweiten Funkkommunikationssystems aufgrund eines dezentral gesteuerten Funkzugriffsverfahrens. Zum Beispiel können die Anweisungen die zeitliche Lage der Zeitabschnitte durch direkte Angabe von Zeitpunkten oder Längen oder implizite Informationen über die zeitliche Lage beinhalten. Bei Verwendung eines zentral gesteuerten Funkzugriffsverfahrens erfolgt eine Kommunikation, nachdem der jeweiligen Funkstation Ressourcen von einer zentralen bzw. funktionell übergeordneten Instanz zugewiesen wurden. Bei einem dezentral gesteuerten Funkzugriffsverfahrens hingegen greifen Funkstationen in der Regel gleichberechtigt auf Funkressourcen zu, ohne dass es für die Belegung von Funkressourcen der Mitwirkung einer zentralen bzw. funktionell übergeordneten Instanz bedarf. Weiterhin können durch die Anweisungen des ersten Funkkommunikationssystems die Verwendung der Zeitabschnitte vorgegeben werden, so zum Beispiel, dass der Zeitabschnitt mit dem dezentral gesteuerten Funkzugriffsverfahren einen Zugriff auf die Funkressourcen für alle Funkstationen des zweiten Funkkommunikationssystems ermöglichen soll, während Funkressourcen des Zeitabschnittes mit dem zentral gesteuerten Funkzugriffsverfahrens nur nach erfolgter Zuweisung dieser Funkressourcen an von dem ersten Funkkommunikationssystem ausgewählte Funkstationen stattfinden darf.

In Weiterbildung der Erfindung wird durch die Nachricht des ersten Funkkommunikationssystems der mindestens einen Funkstation ein Zeitpunkt zur Versendung der Informationen betreffend die Organisation mitgeteilt.

Mit Vorzug betreffen die Informationen betreffend die Organisation die zeitliche Lage von mindestens einem Zeitabschnitt für die Kommunikation innerhalb des zweiten Funkkommunikationssystems aufgrund eines zentral gesteuerten Funkzugriffsverfahrens und/oder die zeitliche Lage von mindestens einem Zeitabschnitt für die Kommunikation innerhalb des zweiten Funkkommunikationssystems aufgrund eines dezentral gesteuerten Funkzugriffsverfahrens. Die zeitliche Lage kann zum Beispiel durch Anfangszeitpunkt und Endzeitpunkt beziehungsweise durch Anfangszeitpunkt und Länge des jeweiligen Zeitabschnittes oder auch durch Anfangszeitpunkt und Beginn eines darauffolgenden Zeitabschnittes gekennzeichnet sein. Es ist möglich, dass Informationen über mehrere Zeitabschnitte eines Typs versendet werden, so zum Beispiel können die nächsten zwei Zeitabschnitte mit einem dezentral gesteuerten Funkzugriffsverfahren angekündigt werden, wobei sich die Art der Informationen, welche über die beiden Zeitabschnitte versendet wird, voneinander-unterscheiden können.

Einer vorteilhaften Ausgestaltung der Erfindung gemäß betreffen die Informationen betreffend die Organisation die Zuweisung von Funkressourcen eines Zeitabschnittes für die Kommunikation innerhalb des zweiten Funkkommunikationssystems aufgrund eines zentral gesteuerten Funkzugriffsverfahrens an mindestens eine Funkstation des zweiten Funkkommunikationssystems. Insbesondere kann eine Zuweisung von Funkressourcen an eine von dem ersten Funkkommunikationssystem mitgeteilte Untermenge der Funkstationen des zweiten Funkkommunikationssystems erfolgen. Auch an die mindestens eine Funkstation, welche die Informationen betreffend die Information ausstrahlt, kann eine Zuweisung von Funkressourcen erfolgen.

In Weiterbildung der Erfindung betreffen die Informationen betreffend die Organisation mindestens einen Zeitpunkt für eine zukünftige Versendung von Informationen betreffend die Organisation der Kommunikation innerhalb des zweiten Funkkommunikationssystems durch mindestens eine Funkstation des zweiten Funkkommunikationssystems und/oder für eine zukünftige Versendung einer Nachricht mit Anweisungen zur Organisation der Kommunikation innerhalb des zweiten Funkkommunikationssystems durch das erste Funkkommunikationssystem. Diese Informationen betreffen somit nicht eine gegebenenfalls im Anschluss an die Versendung der Informationen stattfindende Kommunikation innerhalb des zweiten Funkkommunikationssystems, sondern beziehen sich auf einen langfristigeren Planungszeitraum.

Mit Vorzug schließen sich aufgrund der Anweisungen des ersten Funkkommunikationssystems zur Organisation der Kommunikation innerhalb des zweiten Funkkommunikationssystems zeitlich aneinander an:
- ein Zeitabschnitt mit einer Versendung von Informationen durch mindestens eine Funkstation des zweiten Funkkommunikationssystems betreffend die Organisation der darauffolgenden Kommunikation innerhalb des zweiten Funkkommunikationssystems,
- ein Zeitabschnitt für die Kommunikation innerhalb des zweiten Funkkommunikationssystems aufgrund eines dezentral gesteuerten Funkzugriffsverfahrens,
- ein Zeitabschnitt für die Kommunikation innerhalb des zweiten Funkkommunikationssystems aufgrund eines zentral gesteuerten Funkzugriffsverfahrens.
Diese drei Zeitabschnitte können sich im Wesentlichen direkt aneinander anschließen, gegebenenfalls können geeignete Schutzzeiten (guard periods) zwischen den verschiedenen Zeitabschnitten eingefügt sein. Die Zeitabschnitte treten vorzugsweise in der beschriebenen Reihenfolge auf, jedoch ist auch eine zeitliche Umordnung zwischen den Zeitabschnitten mit dem zentral und dem dezentral gesteuerten Funkzugriffsverfahren möglich.

Einer Ausgestaltung der Erfindung gemäß stehen dem ersten und dem zweiten Funkkommunikationssystem gemeinsame Frequenzfunkressourcen zur Verfügung. Es schließen sich zeitlich aneinander an:
- die Nachricht des ersten Funkkommunikationssystems mit Anweisungen zur Organisation der Kommunikation innerhalb des zweiten Funkkommunikationssystems,
- die drei Zeitabschnitte des zweiten Funkkommunikationssystems der Versendung von Informationen betreffend die Organisation, der Kommunikation aufgrund des dezentral gesteuerten Funkzugriffsverfahrens und der Kommunikation aufgrund des zentral gesteuerten Funkzugriffsverfahrens,
- ein Zeitabschnitt für die Kommunikation innerhalb des ersten Funkkommunikationssystems.
Die dem ersten und dem zweiten Funkkommunikationssystem zur Verfügung stehenden Frequenzfunkressourcen können vollständig übereinstimmen oder sich zumindest teilweise überlappen. Die aufgezählten Zeitabschnitte schließen sich im Wesentlichen direkt aneinander an. Ihre zeitliche Anordnung erfolgt vorzugsweise wie aufgezählt, jedoch sind Umordnungen in der Reihenfolge möglich.

Mit Vorteil erstellt eine Einrichtung des ersten Funkkommunikationssystems die Anweisungen in Abhängigkeit von Informationen über Funkstationen, wie zum Beispiel die Mobilität und die Datenverarbeitungskapazität von Funkstationen, und/oder in Abhängigkeit von Informationen über Funkressourcen des zweiten Funkkommunikationssystems, wie zum Beispiel dem Ausnutzungsgrad von Funkressourcen bzw. der channel busy time. Diese Informationen werden vorzugsweise von Funkstationen des zweiten Funkkommunikationssystems direkt oder über geeignete Einrichtungen an das erste Funkkommunikationssystem übertragen, wo sie in einem Speicher abgelegt werden können. Vorzugsweise existieren Informationen, welche alle Funkstationen des zweiten Funkkommunikationssystems an das erste Funkkommunikationssystem versenden müssen.

Die oben genannte Aufgabe hinsichtlich der Einrichtung in einem Funkkommunikationssystem wird durch eine Einrichtung mit den Merkmalen des Anspruchs 11 gelöst.

Vorteilhafte Ausgestaltungen und Weiterbildungen sind Gegenstand von Unteransprüchen.

Die erfindungsgemäße Einrichtung in einem ersten Funkkommunikationssystem weist Mittel zum Speichern von Informationen über Funkstationen und/oder über Funkressourcen eines zweiten, eine Mehrzahl von Funkstationen umfassenden Funkkommunikationssystems auf. Weiterhin umfasst die Einrichtung Mittel zum Erstellen einer Nachricht mit Anweisungen zur Organisation der Kommunikation innerhalb des zweiten Funkkommunikationssystems, Mittel zum Auswählen einer Teilmenge der Funkstationen des zweiten Funkkommunikationssystems, sowie Mittel zum Versenden der Nachricht an die Teilmenge der Funkstationen des zweiten Funkkommunikationssystems.

Durch die von der erfindungsgemäßen Einrichtung erstellte Nachricht wird zumindest eine Funkstation des zweiten Funkkommunikationssystems angewiesen, in der Nachricht enthaltene Informationen betreffend die Organisation der Kommunikation innerhalb des zweiten Funkkommunikationssystems an weitere Funkstationen des zweiten Funkkommunikationssystems weiterzuleiten.

Die erfindungsgemäße Einrichtung kann auch durch eine Mehrzahl von baulich getrennten, durch geeignete Schnittstellen miteinander verbundenen Einrichtungen realisiert werden.

In Ausgestaltung der Erfindung betreffen die Anweisungen der von der erfindungsgemäßen Einrichtung erstellten Nachricht zeitliche Vorgaben für die Kommunikation innerhalb des zweiten Funkkommunikationssystems und/oder mindestens einen Zeitabschnitt für die Kommunikation innerhalb des zweiten Funkkommunikationssystems aufgrund eines zentral gesteuerten Funkzugriffsverfahrens und mindestens einen Zeitabschnitt für die Kommunikation innerhalb des zweiten Funkkommunikationssystems aufgrund eines dezentral gesteuerten Funkzugriffsverfahrens.

Einer Ausgestaltung der Erfindung gemäß wird durch die von der erfindungsgemäßen Einrichtung erstellte Nachricht der mindestens einen Funkstation ein Zeitpunkt zur Versendung der Informationen betreffend die Organisation mitgeteilt.

Die erfindungsgemäße Einrichtung eignet sich insbesondere zur Durchführung des erfindungsgemäßen Verfahrens, wobei dies auch auf die Ausgestaltungen und Weiterbildungen zutrifft. Hierzu kann sie weitere geeignete Mittel umfassen.

Im folgenden wird die Erfindung anhand eines Ausführungsbeispiels näher erläutert. Dabei zeigen
- Figur 1:: einen Ausschnitt zweier Funkkommunikationssysteme,
- Figur 2:: einen erfindungsgemäßen Aufbau einer Zeitrahmenstruktur,
- Figur 3:: eine erfindungsgemäße Basisstation.

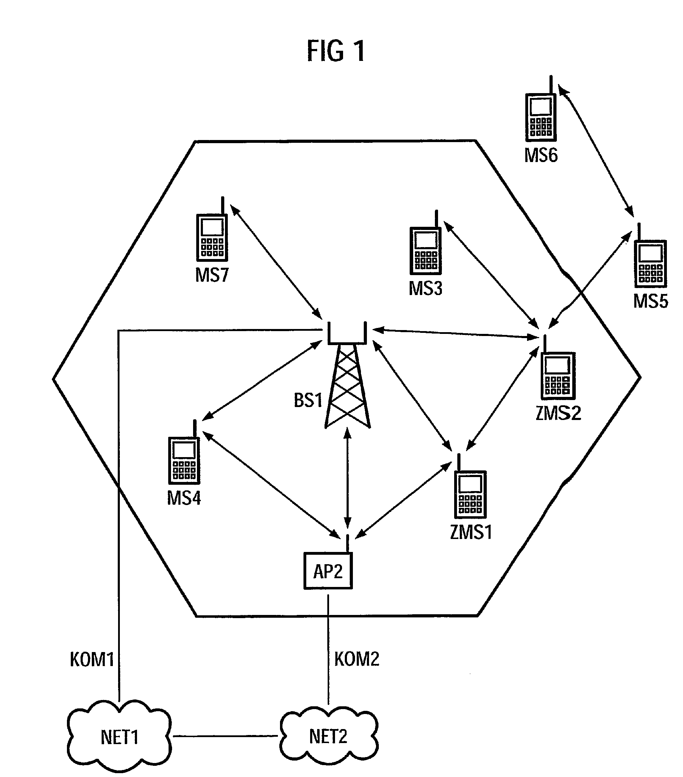

Figur 1 zeigt einen Ausschnitt aus zwei Funkkommunikationssystemen KOM1 und KOM2. Bei dem ersten Funkkommunikationssystem KOM1 handelt es sich um ein zellulares System, wobei eine Basisstation BS1 mit ihrer Funkzelle dargestellt ist. Weitere Basisstationen des in der Regel flächendeckenden Funkkommunikationssystems KOM1 mit ihren jeweiligen Funkzellen sind der Übersichtlichkeit halber in Figur 1 nicht dargestellt. Die Basisstation BS1 ist mit weiteren netzseitigen Einrichtungen NET1 des ersten Funkkommunikationssystems KOM1 verbunden. Weiterer Bestandteil des ersten Funkkommunikationssystems KOM1 ist eine Mobilstation MS7. Bei dem zweiten Funkkommunikationssystem KOM2 handelt es sich um ein WLAN, welches einen Funkzugangspunkt AP2 aufweist. Dieser ist mit weiteren netzseitigen Einrichtungen NET2 des zweiten Funkkommunikationssystems KOM2 verbunden, welcher eine Verbindung mit anderen Daten- und Kommunikationssystemen, wie z.B. mit dem Funkkommunikationssystem KOM1 ermöglicht. Weiterer Bestandteil des zweiten Funkkommunikationssystems KOM2 sind die Mobilstationen ZMS1, ZMS2, MS3, MS4, MS5 und MS6.

Die Mobilstationen ZMS1, ZMS2 und MS4 und der Funkzugangspunkt AP2 sind so ausgestattet, dass sie sowohl innerhalb des ersten Funkkommunikationssystems KOM1 als auch innerhalb des zweiten Funkkommunikationssystems KOM2 kommunizieren können. Die Fähigkeit, mit der Basisstation BS1 zu kommunizieren, ist durch einen Doppelpfeil zwischen den Mobilstationen ZMS1, ZMS2 und MS4 bzw. dem Funkzugangspunkt AP2 und der Basisstation BS1 symbolisiert. Die Mobilstationen ZMS1, ZMS2 und MS4 können somit Bestandteil der ersten und auch des zweiten Funkkommunikationssystems KOM1 bzw. KOM2 sein. Hingegen sind die beiden Mobilstationen MS3, MS5 und MS6 aufgrund der Ausgestaltung ihrer Funkschnittstellen nicht in der Lage, mit der Basisstation BS1 zu kommunizieren. Die Mobilstation MS7 dagegen kann ausschließlich innerhalb des ersten Funkkommunikationssystems KOM1 kommunizieren.

Die Kommunikation zwischen den Mobilstationen ZMS1, ZMS2, MS3, MS4, MS5 und MS6 des zweiten Funkkommunikationssystems KOM2 bzw. zwischen den Mobilstationen ZMS1, ZMS2, MS3, MS4, MS5 und MS6 des zweiten Funkkommunikationssystems KOM2 und Funkstationen anderer Kommunikationssysteme erfolgt über den Funkzugangspunkt AP2. Die beiden Mobilstationen MS4 und ZMS1 befinden sich innerhalb des Funkabdeckungsbereiches des Funkzugangspunktes AP2 und können somit direkt mit diesem kommunizieren, was in Figur 1 durch einen Doppelpfeil zwischen dem Funkzugangspunkt AP2 und den Mobilstationen MS4 und ZMS1 symbolisiert ist.

Mobilstationen, welche sich außerhalb des Funkabdeckungsbereiches des Funkzugangspunktes AP2 befinden, benötigen die Weiterleitung von Nachrichten durch andere Mobilstationen, um die Distanz zu dem Funkzugangpunkt AP2 zu überbrücken. Um die Zuverlässigkeit der Kommunikation über Sprünge innerhalb des zweiten Funkkommunikationssystems KOM2 zu erhöhen, legt die Basisstation BS1 eine Anzahl von Mobilstationen des zweiten Funkkommunikationssystems KOM2 fest, welche somit ein virtuelles Kernnetz des zweiten Funkkommunikationssystems KOM2 bilden. Die Mobilstationen des virtuellen Kernnetzes werden so bestimmt, dass alle oder zumindest ein großer Teil der Kommunikationen zwischen Mobilstationen außerhalb des Funkabdeckungsbereiches des Funkzugangpunktes AP2 und dem Funkzugangpunkt AP2 über die Mobilstationen des virtuellen Kernnetzes abgewickelt werden können. Bei den Mobilstationen des virtuellen Kernnetzes handelt es sich ausschließlich um Mobilstationen, welche innerhalb beider Funkkommunikationssysteme KOM1 und KOM2 kommunizieren können. Im Beispiel der Figur 1 besteht das virtuelle Kernnetz aus den Mobilstationen ZMS1 und ZMS2.

Die Auswahl der Mobilstationen des virtuellen Kernnetzes erfolgt nach Kriterien wie z.B. Mobilität oder Hardwareprofil von Mobilstationen. Hierzu versenden alle Mobilstationen, welche sowohl innerhalb des ersten als auch innerhalb des zweiten Funkkommunikationssystems KOM1 und KOM2 kommunizieren können, die für die Bestimmung des virtuellen Kernnetzes benötigten Informationen an die Basisstation BS1.

Die Kommunikation der Mobilstation ZMS2 mit dem Funkzugangspunkt AP2 verläuft über die Mobilstation ZMS1, die Kommunikation der Mobilstation MS3 und MS5 über die Mobilstationen ZMS2 und ZMS1, und die Kommunikation der Mobilstation MS6 mit dem Funkzugangspunkt AP2 über die Mobilstationen MS5, ZMS2 und ZMS1. Die Pfade zwischen den Mobilstationen ZMS2, MS3, MS5 und MS6 sind jeweils durch Doppelpfeile symbolisiert.

Es wird davon ausgegangen, dass den beiden Funkkommunikationssystemen KOM1 und KOM2 ein gemeinsames Frequenzband zur Kommunikation zur Verfügung steht. Hieraus können Interferenzen zwischen der Kommunikation der Mobilstation MS7 mit der Basisstation BS1 und der Kommunikation der Mobilstationen ZMS1, ZMS2, MS3, MS4, MS5 und MS6 untereinander und mit dem Funkzugangpunkt AP2 resultieren, wenn das gemeinsame Frequenzband von den beiden Funkkommunikationssystemen KOM1 und KOM2 gleichzeitig genutzt wird. Um dies zu umgehen, sendet die Basisstation BS1 eine Nachricht an das zweite Funkkommunikationssystem KOM2 mit einer Angabe, zu welchen Zeiten die gemeinsamen Funkressourcen von dem zweiten Funkkommunikationssystem KOM2 genutzt werden dürfen.

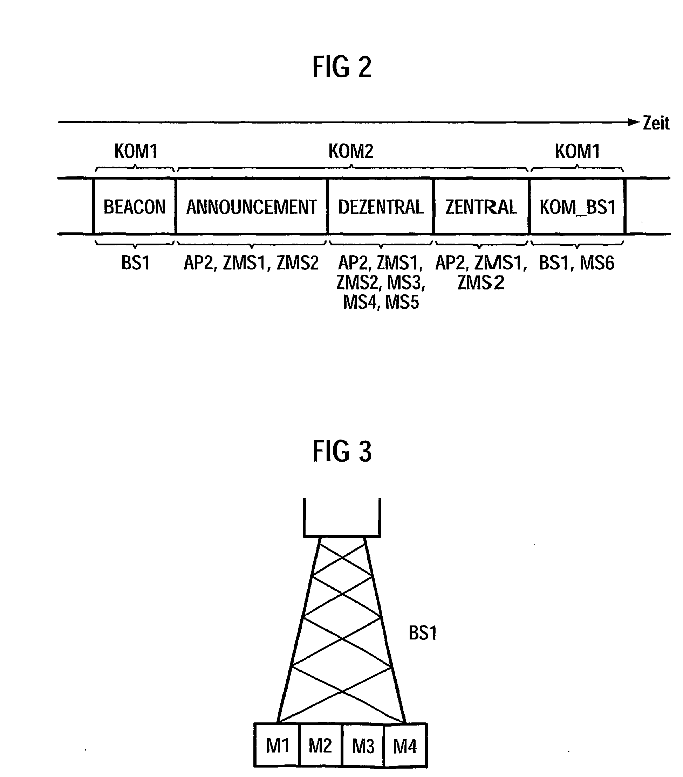

In Figur 2 ist die Aufteilung der Zeit in verschiedene Zeitabschnitte dargestellt, innerhalb welcher die dem ersten und dem zweiten Funkkommunikationssystem KOM1 bzw. KOM2 gemeinsamen Funkressourcen verschieden verwendet werden. Ein erster Zeitabschnitt wird von dem ersten Funkkommunikationssystem KOM1 derart genutzt, dass von der Basisstation BS1 eine Nachricht BEACON ausgestrahlt wird, welche an den Funkzugangspunkt AP2 und an die Mobilstationen ZMS1 und ZMS2 des virtuellen Kernnetzes adressiert ist. Die Nachricht BEACON dient der Organisation der folgenden drei Zeitabschnitte, während denen die Funkressourcen von dem zweiten Funkkommunikationssystem KOM2 genutzt werden.

In der Nachricht BEACON wird dem Funkzugangspunkt AP2 und den Mobilstationen ZMS1 und ZMS2 mitgeteilt, wann sie eine Nachricht ANNOUNCEMENT ausstrahlen sollen, wobei der mitgeteilte Zeitpunkt sich für die verschiedenen, die Nachricht ANNOUNCEMENT ausstrahlenden Funkstationen voneinander unterscheiden kann. Der früheste Zeitpunkt gibt den Beginn einer Zeitphase an, während welcher das Frequenzband dem zweiten Funkkommunikationssystem KOM2 zur Verfügung steht. Die Versendung der Nachricht ANNOUNCEMENT erfolgt dann zu dem bzw. zu den von der Basisstation BS1 angeordneten Zeitpunkt bzw. Zeitpunkten durch den Funkzugangspunkt AP2 und durch die Mobilstationen ZMS1 und ZMS2 per Broadcast, so dass alle Mobilstationen innerhalb des Funkabdeckungsbereiches des Funkzugangspunktes AP2 und der Mobilstationen ZMS1 und ZMS2 die Nachricht ANNOUNCEMENT empfangen und auswerten können. Mit der Nachricht BEACON kann auch nur ein Teil der Mobilstationen ZMS1, ZMS2 des virtuellen Kernnetzes und des Funkzugangspunktes AP2 zur Versendung der Nachricht ANNOUNCEMENT aufgefordert werden.

Weiterhin werden dem Funkzugangspunkt AP2 und den Mobilstationen ZMS1 und ZMS2 mit der Nachricht BEACON Anweisungen über den Inhalt der Nachricht ANNOUNCEMENT erteilt. In der Nachricht ANNOUNCEMENT wird den Mobilstationen MS3, MS4, MS5 und MS6 des zweiten Funkkommunikationssystems KOM2 die zeitliche Lage eines Zeitabschnittes DEZENTRAL, welcher für den dezentralen Zugriff auf Funkressourcen und die darauffolgende Kommunikation verwendet wird, mitgeteilt. Die Angabe der zeitlichen Lage kann z.B. durch Anfangszeitpunkt und Länge des Zeitabschnittes oder durch Anfangs- und Endzeitpunkt erfolgen. In dem Zeitabschnitt DEZENTRAL dürfen der Funkzugangspunkt AP2 und die Mobilstationen ZMS1, ZMS2, MS3, MS4, MS5 und MS6 dezentral auf die Funkressourcen zugreifen. Ein Beispiel für eine dezentrale Belegung von Funkressourcen ist ein CSMA (Carrier Sense Multiple Access) Verfahren, wie es in IEEE 802.11 angewandt wird, oder auch eine Belegung von Funkressourcen nach einem R-ALOHA Verfahren. Diejenigen Funkstationen, welchen es gelungen ist, Funkressourcen innerhalb des Zeitabschnittes DEZENTRAL zu belegen, können diese Funkressourcen zur Versendung von Nachrichten innerhalb des Zeitabschnittes DEZENTRAL verwenden, wobei eine Belegung von Funkressourcen jedoch streng an das Ende des Zeitabschnittes DEZENTRAL gebunden ist.

Weiterhin kann die Nachricht ANNOUNCEMENT den Mobilstationen MS3, MS4, MS5 und MS6 Informationen aus der Nachricht BEACON weitergeben, die den Zeitpunkt der nächsten Versendung einer entsprechenden Nachricht ANNOUNCEMENT und die zeitliche Lage eines nächsten Zeitabschnittes DEZENTRAL ankündigen. Durch diese Informationen können die Mobilstationen MS3, MS4, MS5 und MS6 in den Zeitspannen, in welchen sie weder auf die Nachricht ANNOUNCEMENT hören, noch in einem Zeitabschnitt DEZENTRAL kommunizieren, andere Aufgaben wahrnehmen, wie z.B. den Wechsel in einen Power-Saving-Modus. Weiterhin erleichtert die Ankündigung des nächsten Zeitabschnittes DEZENTRAL den Mobilstationen MS3, MS4, MS5 und MS6 die Synchronisation auf den nächsten Zeitabschnitt DEZENTRAL.

Nach dem Zeitabschnitt DEZENTRAL folgt der Zeitabschnitt ZENTRAL, während welchem das Frequenzband dem zweiten Funkkommunikationssystem KOM2 zur Verfügung steht. Im Gegensatz zum Zeitabschnitt DEZENTRAL erfolgt jedoch die Kommunikation innerhalb des Zeitabschnittes ZENTRAL ausschließlich nach zentraler Vergabe von Funkressourcen. Hierzu teilt die Basisstation BS1 in der Nachricht BEACON eine Zuordnung von Funkressourcen des Zeitabschnittes ZENTRAL zu dem Funkzugangspunkt AP2 bzw. zu den Mobilstationen ZMS1 und ZMS2 des virtuellen Kernnetzes mit. Eine Kommunikation während dem Zeitabschnitt ZENTRAL ist somit nur einer Teilmenge der Funkstationen des zweiten Funkkommunikationssystems KOM2 erlaubt. Die Kommunikation des Funkzugangspunktes AP2 bzw. der Mobilstationen ZMS1 und ZMS2 während dem Zeitabschnitt ZENTRAL unter Verwendung der ihnen von der Basisstation BS1 zugewiesenen Funkressourcen dient der effizienten Kommunikation über Sprünge innerhalb des zweiten Funkkommunikationssystems KOM2. So können in dem Zeitabschnitt ZENTRAL z.B. Informationen, welche die Mobilstation MS5 zuvor während dem Zeitabschnitt DEZENTRAL an die Mobilstation ZMS2 gesendet hat, an den Funkzugangspunkt AP2 weitergeleitet werden.

Die Basisstation BS1 kann die Mobilstationen ZMS1 und ZMS2, sowie den Funkzugangspunkt AP2 mit der Nachricht BEACON auch anweisen, in der Nachricht ANNOUNCEMENT Informationen über die zeitliche Lage des Zeitabschnittes ZENTRAL zu versenden. Diese Information zeigt den Mobilstationen MS3, MS4 und MS5 dann an, in welcher Zeitspanne sie nicht dezentral auf die Funkressourcen zugreifen dürfen.

Die Verwendung eines Zeitabschnittes DEZENTRAL für die Kommunikation der Mobilstationen ZMS1, ZMS2, MS3, MS4, MS5 und MS6 des zweiten Funkkommunikationssystems KOM2 ist neben einem Zeitabschnitt ZENTRAL, welcher von der Basisstation BS1 verwaltet wird, sinnvoll, da die Mobilstationen MS3, MS5 und MS6 nicht mit der Basisstation BS1 kommunizieren können, so dass die Basisstation BS1 auf direktem Weg keine Kenntnisse über die Existenz dieser Mobilstationen erlangen kann. Ein dezentrales Funkzugriffsverfahren ermöglicht es somit allen Mobilstationen ZMS1, ZMS2, MS3, MS4, MS5 und MS6 des zweiten Funkkommunikationssystems KOM2 miteinander oder mit dem Funkzugangspunkt AP2 zu kommunizieren, ohne dass die Basisstation BS1 zur Organisation dieser Kommunikation benötigt wird. Dies erhöht die Flexibilität der Kommunikation innerhalb des zweiten Funkkommunikationssystems KOM2.

Während des Zeitabschnittes DEZENTRAL beobachten die Mobilstationen ZMS1, ZMS2, MS3, MS4, MS5 und MS6 den Funkkanal und bestimmen die Zeit, während welchem der Funkkanal in ihrer Umgebung belegt ist (engl.: channel busy time). Bei einer Versendung von Nachrichten durch die Mobilstationen ZMS1, ZMS2, MS3, MS4, MS5 und MS6 zu dem Funkzugangspunkt AP2 wird die so ermittelte Belegungszeit des Funkkanals mitübertragen. Diese Informationen sendet der Funkzugangspunkt AP2 an die Basisstation BS1, welche einen geeigneten Mittelwert der Belegungszeiten dazu verwenden kann, die Länge von zukünftigen Zeitabschnitten DEZENTRAL zu bestimmen. Dadurch, dass das Verhältnis der Längen der beiden Zeitabschnitte DEZENTRAL und ZENTRAL mit der Zeit variieren kann, wird eine dynamische Funkressourcenverteilung zwischen den beiden Modi des zentralen und des dezentralen Funkzugriffsverfahrens realisiert.

Die Mobilstation MS6 kann die von dem Funkzugangspunkt AP2 sowie von den Mobilstationen ZMS1 und ZMS2 ausgestrahlte Nachricht ANNOUNCEMENT nicht empfangen, da sie sich außerhalb des Funkabdeckungsbereiches der Mobilstation ZMS2 aufhält. Daher hat die Mobilstation MS6 keine Kenntnis über die zeitliche Lage des ihr für Zufallszugriffe zur Verfügung stehenden Zeitabschnittes DEZENTRAL. Daher ist es möglich, dass die Mobilstation MS6 versucht, während des Zeitabschnittes ZENTRAL Funkressourcen für die Versendung einer Nachricht an die Mobilstation MS5 zu belegen. Da die Mobilstation MS5 jedoch die Nachricht ANNOUNCEMENT empfangen und ausgewertet hat, reagiert sie nicht auf die Belegungsversuche der Mobilstation MS6. Eine Störung der Versendung von Nachrichten während des Zeitabschnittes ZENTRAL durch die Belegungsversuche der Mobilstation MS6 findet nicht statt, da die Kommunikation innerhalb des Zeitabschnittes ZENTRAL ausschließlich durch den Funkzugangspunkt AP2 und die Mobilstationen ZMS1 und ZMS2 geführt wird, welche sich außerhalb des Funkabdeckungsbereiches der Mobilstation MS6 befinden. Diejenigen Mobilstationen MS4, MS3 und MS5 hingegen, welche die Kommunikation während des Zeitabschnittes ZENTRAL stören könnten, berücksichtigen die Informationen der Nachricht ANNOUNCEMENT und greifen während des Zeitabschnittes ZENTRAL nicht auf Funkressourcen zu.

Die Reihenfolge der beiden Zeitabschnitte DEZENTRAL und ZENTRAL kann umgekehrt werden. Die beschriebene Anordnung hat jedoch den Vorteil, dass durch eine potentielle Verlängerung der Nachricht ANNOUNCEMENT zwar die Länge des Zeitabschnittes DEZENTRAL verkürzt wird, jedoch keine Modifikation der erfolgten Zuweisung von Funkressourcen des Zeitabschnittes ZENTRAL erforderlich ist.

Nach dem Ende des Zeitabschnittes ZENTRAL folgt ein Zeitabschnitt KOM_BS1, während welchem das Frequenzband dem ersten Funkkommunikationssystem KOM1 zur Verfügung steht, so dass in dem Zeitabschnitt KOM_BS1 eine Kommunikation zwischen der Basisstation BS1 und der Mobilstation MS7 erfolgen kann. Anschließend versendet die Basisstation BS1 erneut eine Nachricht BEACON mit Organisationsinformationen für die Kommunikation innerhalb des zweiten Funkkommunikationssystems KOM2. Vorzugsweise erfolgt die Versendung der Nachricht BEACON periodisch.

Während das Verfahren für den Fall beschrieben wurde, dass die Kommunikation zwischen den Mobilstationen ZMS1, ZMS2, MS3, MS4, MS5 und MS6 des zweiten Funkkommunikationssystems KOM2 über den Funkzugangspunkt AP2 verläuft, ist das Verfahren auch auf den Fall eines Adhoc-Modus des zweiten Funkkommunikationssystems KOM2 anwendbar, in welchem die Mobilstationen ZMS1, ZMS2, MS3, MS4, MS5 und MS6 direkt miteinander kommunizieren können, ohne dass die Nachrichten über den Funkzugangspunkt AP2 weitergeleitet werden.

Figur 3 zeigt den Aufbau der Basisstation BS1. Diese weist Mittel M1 zum Speichern von Informationen auf, welche sie von den Mobilstationen oder dem Funkzugangspunkt des zweiten Funkkommunikationssystems empfangen hat. In Abhängigkeit von diesen Informationen erstellt sie unter Verwendung der Mittel M2 eine Nachricht BEACON. Die Mittel M3 dienen zum Bestimmen der Mobilstationen des zweiten Funkkommunikationssystems, welche das virtuelle Kernnetz bilden und somit Empfänger der Nachricht BEACON sind. Weiterer Bestandteil der Basisstation BS1 sind die Mittel M4 zum Versenden der Nachricht BEACON. Der Lokalisierung der Mittel M1, M2, M3 und M4 in der Basisstation BS1 steht eine Ausgliederung von Mitteln in andere mit der Basisstation BS1 direkt oder über andere netzseitige Einrichtungen verbundene Einrichtungen gleich.

## Patentansprüche

1. Verfahren zum Betreiben eines ersten (KOM1) und eines zweiten (KOM2) eine Mehrzahl von Funkstationen (AP2, ZMS1, ZMS2, MS3, MS4, MS5, MS6) umfassenden Funkkommunikationssystems,
wobei die Funkabdeckungsbereiche des ersten (KOM1) und des zweiten (KOM2) Funkkommunikationssystems zumindest teilweise überlappen,
wobei von dem ersten Funkkommunikationssystem (KOM1) eine Nachricht (BEACON) mit Anweisungen zur Organisation der Kommunikation innerhalb des zweiten Funkkommunikationssystems (KOM2) an zumindest einen Teil der Funkstationen (AP2, ZMS1, ZMS2) des zweiten Funkkommunikationssystems (KOM2) versendet wird
**dadurch gekennzeichnet,**
**dass** durch die Nachricht (BEACON) des ersten Funkkommunikationssystems (KOM1) zumindest eine Funkstation (AP2, ZMS1, ZMS2) des zweiten Funkkommunikationssystems (KOM2) angewiesen wird, in der Nachricht (BEACON) enthaltene Informationen (ANNOUNCEMENT) betreffend die Organisation der Kommunikation innerhalb des zweiten Funkkommunikationssystems (KOM2) an weitere Funkstationen (MS3, MS4, MS5, MS6) des zweiten Funkkommunikationssystems (KOM2) weiterzuleiten.

2. Verfahren nach Anspruch 1,
**dadurch gekennzeichnet,**
**dass** die Anweisungen zeitliche Vorgaben für die Kommunikation innerhalb des zweiten Funkkommunikationssystems (KOM2) betreffen.

3. Verfahren nach Anspruch 1 oder 2,
**dadurch gekennzeichnet,**
**dass** die Anweisungen
- mindestens einen Zeitabschnitt (ZENTRAL) für die Kommunikation innerhalb des zweiten Funkkommunikationssystems (KOM2) aufgrund eines zentral gesteuerten Funkzugriffsverfahrens und
- mindestens einen Zeitabschnitt (DEZENTRAL) für die Kommunikation innerhalb des zweiten Funkkommunikationssystems (KOM2) aufgrund eines dezentral gesteuerten Funkzugriffsverfahrens
betreffen.

4. Verfahren nach einem der Ansprüche 1 bis 3,
**dadurch gekennzeichnet,**
**dass** durch die Nachricht (BEACON) des ersten Funkkommunikationssystems (KOM1) der mindestens einen Funkstation (AP2, ZMS1, ZMS2) ein Zeitpunkt zur Versendung der Informationen (ANNOUNCEMENT) betreffend die Organisation mitgeteilt wird.

5. Verfahren nach einem der Ansprüche 1 bis 4,
**dadurch gekennzeichnet,**
**dass** die Informationen (ANNOUNCEMENT) betreffend die Organisation
- die zeitliche Lage von mindestens einem Zeitabschnitt (ZENTRAL) für die Kommunikation innerhalb des zweiten Funkkommunikationssystems (KOM2) aufgrund eines zentral gesteuerten Funkzugriffsverfahrens und/oder
- die zeitliche Lage von mindestens einem Zeitabschnitt (DEZENTRAL) für die Kommunikation innerhalb des zweiten Funkkommunikationssystems (KOM2) aufgrund eines dezentral gesteuerten Funkzugriffsverfahrens
betreffen.

6. Verfahren nach einem der Ansprüche 1 bis 5,
**dadurch gekennzeichnet,**
**dass** die Informationen (ANNOUNCEMENT) betreffend die Organisation die Zuweisung von Funkressourcen eines Zeitabschnittes (ZENTRAL) für die Kommunikation innerhalb des zweiten Funkkommunikationssystems (KOM2) aufgrund eines zentral gesteuerten Funkzugriffsverfahrens an mindestens eine Funkstation (AP2, ZMS1, ZMS2) des zweiten Funkkommunikationssystems (KOM2) betreffen.

7. Verfahren nach einem der Ansprüche 1 bis 6,
**dadurch gekennzeichnet,**
**dass** die Informationen (ANNOUNCEMENT) betreffend die Organisation mindestens einen Zeitpunkt
- für eine zukünftige Versendung von Informationen (ANNOUNCEMENT) betreffend die Organisation der Kommunikation innerhalb des zweiten Funkkommunikationssystems (KOM2) durch mindestens eine Funkstation (AP2, ZMS1, ZMS2) des zweiten Funkkommunikationssystems (KOM2) und/oder
- für eine zukünftige Versendung einer Nachricht (BEACON) mit Anweisungen zur Organisation der Kommunikation innerhalb des zweiten Funkkommunikationssystems (KOM2) durch das erste Funkkommunikationssystem (KOM1)
betreffen.

8. Verfahren nach einem der Ansprüche 1 bis 7,
**dadurch gekennzeichnet,**
**dass** sich aufgrund der Anweisungen des ersten Funkkommunikationssystems (KOM1) zur Organisation der Kommunikation innerhalb des zweiten Funkkommunikationssystems (KOM2) zeitlich aneinander anschließen:
- ein Zeitabschnitt mit einer Versendung von Informationen (ANNOUNCEMENT) durch mindestens eine Funkstation (AP2, ZMS1, ZMS2) des zweiten Funkkommunikationssystems (KOM2) betreffend die Organisation der darauffolgenden Kommunikation innerhalb des zweiten Funkkommunikationssystems (KOM2),
- ein Zeitabschnitt (DEZENTRAL) für die Kommunikation innerhalb des zweiten Funkkommunikationssystems (KOM2) aufgrund eines dezentral gesteuerten Funkzugriffsverfahrens,
- ein Zeitabschnitt (ZENTRAL) für die Kommunikation innerhalb des zweiten Funkkommunikationssystems (KOM2) aufgrund eines zentral gesteuerten Funkzugriffsverfahrens.

9. Verfahren nach Anspruch 8,
**dadurch gekennzeichnet,**
**dass** dem ersten (KOM1) und dem zweiten (KOM2) Funkkommunikationssystem gemeinsame Frequenzfunkressourcen zur Verfügung stehen und dass sich zeitlich aneinander anschließen:
- die Nachricht (BEACON) des ersten Funkkommunikationssystems (KOM1) mit Anweisungen zur Organisation der Kommunikation innerhalb des zweiten Funkkommunikationssystems (KOM2),
- die drei Zeitabschnitte des zweiten Funkkommunikationssystems (KOM2)
• der Versendung von Informationen (ANNOUNCEMENT) betreffend die Organisation,
• der Kommunikation aufgrund des dezentral gesteuerten Funkzugriffsverfahrens und
• der Kommunikation aufgrund des zentral gesteuerten Funkzugriffsverfahrens,
- ein Zeitabschnitt (KOM_BS1) für die Kommunikation innerhalb des ersten Funkkommunikationssystems (KOM1).

10. Verfahren nach einem der Ansprüche 1 bis 9,
**dadurch gekennzeichnet,**
**dass** eine Einrichtung (BS1) des ersten Funkkommunikationssystems (KOM1) die Anweisungen in Abhängigkeit von Informationen über Funkstationen (AP2, ZMS1, ZMS2, MS3, MS4, MS5, MS6) und/oder über Funkressourcen des zweiten Funkkommunikationssystems (KOM2) erstellt.

11. Einrichtung (BS1) in einem ersten Funkkommunikationssystem (KOM1) mit
- Mitteln (M1) zum Speichern von Informationen über Funkstationen (AP2, ZMS1, ZMS2, MS3, MS4, MS5, MS6) und/oder über Funkressourcen eines zweiten (KOM2) eine Mehrzahl von Funkstationen (AP2, ZMS1, ZMS2, MS3, MS4, MS5, MS6) umfassenden Funkkommunikationssystems (KOM2),
- Mitteln (M2) zum Erstellen einer Nachricht (BEACON) mit Anweisungen zur Organisation der Kommunikation innerhalb des zweiten Funkkommunikationssystems (KOM2), wobei durch die von der Einrichtung (BS1) erstellte Nachricht (BEACON) zumindest eine Funkstation (AP2, ZMS1, ZMS2) des zweiten Funkkommunikationssystems (KOM2) angewiesen wird, in der Nachricht (BEACON) enthaltene Informationen (ANNOUNCEMENT) betreffend die Organisation der Kommunikation innerhalb des zweiten Funkkommunikationssystems (KOM2) an weitere Funkstationen (MS3, MS4, MS5, MS6) des zweiten Funkkommunikationssystems (KOM2) weiterzuleiten,
- Mitteln (M3) zum Auswählen einer Teilmenge der Funkstationen (AP2, ZMS1, ZMS2) des zweiten Funkkommunikationssystems (KOM2),
- Mitteln (M4) zum Versenden der Nachricht (BEACON) an die Teilmenge der Funkstationen (AP2, ZMS1, ZMS2) des zweiten Funkkommunikationssystems (KOM2).

12. Einrichtung (BS1) nach Anspruch 11,
**dadurch gekennzeichnet,**
**dass** die Anweisungen der von der Einrichtung (BS1) erstellten Nachricht (BEACON)
- zeitliche Vorgaben für die Kommunikation innerhalb des zweiten Funkkommunikationssystems (KOM2) und/oder
- mindestens einen Zeitabschnitt (ZENTRAL) für die Kommunikation innerhalb des zweiten Funkkommunikationssystems (KOM2) aufgrund eines zentral gesteuerten Funkzugriffsverfahrens und mindestens einen Zeitabschnitt (DEZENTRAL) für die Kommunikation innerhalb des zweiten Funkkommunikationssystems (KOM2) aufgrund eines dezentral gesteuerten Funkzugriffsverfahrens
betreffen.

13. Einrichtung (BS1) nach Anspruch 11 oder 12,
**dadurch gekennzeichnet,**
**dass** durch die von der Einrichtung (BS1) erstellte Nachricht (BEACON) der mindestens einen Funkstation (AP2, ZMS1, ZMS2) ein Zeitpunkt zur Versendung der Informationen (ANNOUNCEMENT) betreffend die Organisation mitgeteilt wird.

## Claims

1. Method for operating a first (KOM1) and a second (KOM2) radio communication system incorporating a plurality of radio stations (AP2, ZMS1, ZMS2, MS3, MS4, MS5, MS6),
wherein the radio coverage areas of the first (KOM1) and of the second (KOM2) radio communication system overlap at least in part,
wherein a message (BEACON) with instructions for organising communication within the second radio communication system (KOM2) is sent by the first radio communication system (KOM1) to at least some of the radio stations (AP2, ZMS1, ZMS2) of the second radio communication system (KOM2),
**characterised in that**,
by means of the message (BEACON) of the first radio communication system (KOM1), at least one radio station (AP2, ZMS1, ZMS2) of the second radio communication system (KOM2) is instructed to send information (ANNOUNCEMENT) contained in the message (BEACON) concerning the organisation of communication within the second radio communication system (KOM2) to other radio stations (MS3, MS4, MS5, MS6) of the second radio communication system (KOM2).

2. Method according to claim 1,
**characterised in that**
the instructions relate to timing specifications for communication within the second radio communication system (KOM2).

3. Method according to claim 1 or 2,
**characterised in that**
the instructions relate to
- at least one time slot (CENTRAL) for communication within the second radio communication system (KOM2) on the basis of a centrally controlled radio access method and
- at least one time slot (DECENTRAL) for communication within the second radio communication system (KOM2) on the basis of a decentrally controlled radio access method.

4. Method according to claim 1 to 3,
**characterised in that**
by means of the message (BEACON) of the first communication system (KOM1), a time for sending the information (ANNOUNCEMENT) concerning the organisation is communicated to the one or more radio stations (AP2, ZMS1, ZMS2).

5. Method according to claim 1 to 4,
**characterised in that**
the information (ANNOUNCEMENT) concerning the organisation relates to
- the timing of at least one time slot (CENTRAL) for communication within the second radio communication system (KOM2) on the basis of a centrally controlled radio access method and/or
- the timing of at least one time slot (DECENTRAL) for communication within the second radio communication system (KOM2) on the basis of a decentrally controlled radio access method.

6. Method according to one of claims 1 to 5,
**characterised in that**
the information (ANNOUNCEMENT) concerning the organisation relates to the assignment of radio resources of a time slot (CENTRAL) for communication within the second radio communication system (KOM2) on the basis of a centrally controlled radio access method to at least one radio station (AP2, ZMS1, ZMS2) of the second radio communication system (KOM2) .

7. Method according to one of claims 1 to 6,
**characterised in that**
the information (ANNOUNCEMENT) concerning the organisation relates to at least one time
- for future transmission of information (ANNOUNCEMENT) concerning the organisation of communication within the second radio communication system (KOM2) by at least one radio station (AP2, ZMS1, ZMS2) of the second radio communication system (KOM2) and/or
- for future transmission of a message (BEACON) with instructions concerning the organisation of communication within the second radio communication system (KOM2) by the first radio communication system (KOM1).

8. Method according to one of claims 1 to 7,
**characterised in that**
on the basis of the instructions of the first radio communication system (KOM1) for organising communication within the second radio communication system (KOM2), the sequence is as follows:
- a time slot with transmission of information (ANNOUNCEMENT) by at least one radio station (AP2, ZMS1, ZMS2) of the second radio communication system (KOM2) concerning the organisation of subsequent communication within the second radio communication system (KOM2),
- a time slot (DECENTRAL) for communication within the second radio communication system (KOM2) on the basis of a decentrally controlled radio access method,
- a time slot (CENTRAL) for communication within the second radio communication system (KOM2) on the basis of a centrally controlled radio access method.

9. Method according to claim 8,
**characterised in that**
common frequency radio resources are available to the first (KOM1) and the second (KOM2) radio communication system and that the sequence is as follows:
- the message (BEACON) of the first radio communication system (KOM1) with instructions for organising communication within the second radio communication system (KOM2),
- the three time slots of the second radio communication system (KOM2)
• for the transmission of information (ANNOUNCEMENT) concerning the organisation,
• for communication on the basis of the decentrally controlled radio access method and
• for communication on the basis of the centrally controlled radio access method,
- a time slot (KOM_BS1) for communication within the first radio communication system (KOM1).

10. Method according to one of claims 1 to 9,
**characterised in that**
a device (BS1) of the first radio communication system (KOM1) creates instructions depending on information about radio stations (AP2, ZMS1, ZMS2, MS3, MS4, MS5, MS6) and/or about radio resources of the second radio communication system (KOM2).

11. Device (BS1) in a first radio communication (KOM1) with
- means (M1) of storing information about radio stations (AP2, ZMS1, ZMS2, MS3, MS4, MS5, MS6) and/or about radio resources of a second radio communication system (KOM2) comprising a plurality of radio stations (AP2, ZMS1, ZMS2, MS3, MS4, MS5, MS6),
- means (M2) of creating a message (BEACON) with instructions for organising communication within the second radio communication system (KOM2),
wherein, by means of the message (BEACON) created by the device BS1 of the first radio communication system (KOM1), at least one radio station (AP2, ZMS1, ZMS2) of the second radio communication system (KOM2) is instructed to send information (ANNOUNCEMENT) contained in the message (BEACON) concerning the organisation of communication within the second radio communication system (KOM2) to other radio stations (MS3, MS4, MS5, MS6) of the second radio communication system (KOM2)
- means (M3) of selecting a subset of the radio stations (AP2, ZMS1, ZMS2) of the second radio communication system (KOM2),
- means (M4) of transmitting the message (BEACON) to the subset of radio stations (AP2, ZMS1, ZMS2) of the second radio communication system (KOM2).

12. Device (BS1) according to claim 11,
**characterised in that**
the instructions in the message (BEACON) created by the device (BS1) relate to
- timing specifications for communication within the second radio communication system (KOM2) and/or
- at least one time slot (CENTRAL) for communication within the second radio communication system (KOM2) on the basis of a centrally controlled radio access method and at least one time slot (DECENTRAL) for communication within the second radio communication system (KOM2) on the basis of a decentrally controlled radio access method.

13. Device (BS1) according to claim 11 or 12,
**characterised in that**
by means of the message (BEACON) created by the device (BS1), a time for transmitting the information (ANNOUNCEMENT) concerning the organisation is communicated to the one or more radio stations (AP2, ZMS1, ZMS2).

## Revendications

1. Procédé pour exploiter un premier système de radiocommunication (KOM1) et un deuxième système de radiocommunication (KOM2) comprenant une pluralité de stations radio (AP2, ZMS1, ZMS2, MS3, MS4, MS5, MS6),
les zones de couverture radio du premier système de radiocommunication (KOM1) et du deuxième système de radiocommunication (KOM2) se chevauchant au moins partiellement,
un message (BEACON) avec des instructions relatives à l'organisation de la communication au sein du deuxième système de radiocommunication (KOM2) étant envoyé par le premier système de radiocommunication (KOM1) à au moins une partie des stations radio (AP2, ZMS1, ZMS2) du deuxième système de radiocommunication (KOM2),
**caractérisé en ce que**, par le message (BEACON) du premier système de radiocommunication (KOM1), au moins une station radio (AP2, ZMS1, TMS2) du deuxième système de radiocommunication (KOM2) reçoit l'instruction de retransmettre des informations (ANNOUNCEMENT) contenues dans le message (BEACON) et concernant l'organisation de la communication au sein du deuxième système de radiocommunication (KOM2) à d'autres stations radio (MS3, MS4, MS5, MS6) du deuxième système de radiocommunication (KOM2).

2. Procédé selon la revendication 1, **caractérisé en ce que** les instructions concernent des consignes de temps pour la communication au sein du deuxième système de radiocommunication (KOM2).

3. Procédé selon la revendication 1 ou 2, **caractérisé en ce que** les instructions concernent
- au moins une tranche de temps (ZENTRAL) pour la communication au sein du deuxième système de radiocommunication (KOM2) sur la base d'un procédé d'accès radio à commande centralisée et
- au moins une tranche de temps (DEZENTRAL) pour la communication au sein du deuxième système de radiocommunication (KOM2) sur la base d'un procédé d'accès radio à commande décentralisée.

4. Procédé selon l'une des revendications 1 à 3, **caractérisé en ce qu'**il est communiqué à l'au moins une station radio (AP2, ZMS1, ZMS2), par le message (BEACON) du premier système de radiocommunication (KOM1), un instant pour l'émission des informations (ANNOUNCEMENT) concernant l'organisation.

5. Procédé selon l'une des revendications 1 à 4, **caractérisé en ce que** les informations (ANNOUNCEMENT) concernant l'organisation concernent
- la position temporelle d'au moins une tranche de temps (ZENTRAL) pour la communication au sein du deuxième système de radiocommunication (KOM2) sur la base d'un procédé d'accès radio à commande centralisée et/ou
- la position temporelle d'au moins une tranche de temps (DEZENTRAL) pour la communication au sein du deuxième système de radiocommunication (KOM2) sur la base d'un procédé d'accès radio à commande décentralisée.

6. Procédé selon l'une des revendications 1 à 5, **caractérisé en ce que** les informations (ANNOUNCEMENT) concernant l'organisation concernent l'allocation de ressources radio d'une tranche de temps (ZENTRAL) pour la communication au sein du deuxième système de radiocommunication (KOM2) sur la base d'un procédé d'accès radio à commande centralisée à au moins une station radio (AP2, ZMS1, ZMS2) du deuxième système de radiocommunication (KOM2).

7. Procédé selon l'une des revendications 1 à 6, **caractérisé en ce que** les informations (ANNOUNCEMENT) concernant l'organisation concernent au moins un instant
- pour une émission future d'informations (ANNOUNCEMENT) concernant l'organisation de la communication au sein du deuxième système de radiocommunication (KOM2) par au moins une station radio (AP2, ZMS1, ZMS2) du deuxième système de radiocommunication (KOM2) et/ou
- pour une émission future d'un message (BEACON) avec des instructions relatives à l'organisation de la communication au sein du deuxième système de radiocommunication (KOM2) par le premier système de radiocommunication (KOM1).

8. Procédé selon l'une des revendications 1 à 7, **caractérisé en ce que**, suite aux instructions du premier système de radiocommunication (KOM1) relatives à l'organisation de la communication au sein du deuxième système de radiocommunication (KOM2), se succèdent dans le temps:
- une tranche de temps avec une émission d'informations (ANNOUNCEMENT) par au moins une station radio (AP2, ZMS1, ZMS2) du deuxième système de radiocommunication (KOM2) concernant l'organisation de la communication subséquente au sein du deuxième système de radiocommunication (KOM2),
- une tranche de temps (DEZENTRAL) pour la communication au sein du deuxième système de radiocommunication (KOM2) sur la base d'un procédé d'accès radio à commande décentralisée,
- une tranche de temps (ZENTRAL) pour la communication au sein du deuxième système de radiocommunication (KOM2) sur la base d'un procédé d'accès radio à commande centralisée.

9. Procédé selon la revendication 8, **caractérisé en ce que** des ressources de radiofréquences communes sont à la disposition du premier système de radiocommunication (KOM1) et du deuxième système de radiocommunication (KOM2) et **en ce que** se succèdent dans le temps:
- le message (BEACON) du premier système de radiocommunication (KOM1) avec des instructions relatives à l'organisation de la communication au sein du deuxième système de radiocommunication (KOM2),
- les trois tranches de temps du deuxième système de radiocommunication (KOM2):
• envoi d'informations (ANNOUNCEMENT) concernant l'organisation,
• communication sur la base du procédé d'accès radio à commande décentralisée et
• communication sur la base du procédé d'accès radio à commande centralisée,
- une tranche de temps (KOM_BS1) pour la communication au sein du premier système de radiocommunication (KOM1) .

10. Procédé selon l'une des revendications 1 à 9, **caractérisé en ce qu'**un dispositif (BS1) du premier système de radiocommunication (KOM1) crée les instructions en fonction d'informations sur des stations radio (AP2, ZMS1, ZMS2, MS3, MS4, MS5, MS6) et/ou sur des ressources radio du deuxième système de radiocommunication (KOM2).

11. Dispositif (BS1), dans un premier système de radiocommunication (KOM1), comprenant
- des moyens (M1) pour mettre en mémoire des informations sur des stations radio (AP2, ZMS1, ZMS2, MS3, MS4, MS5, MS6) et/ou sur des ressources radio d'un deuxième système de radiocommunication (KOM2) comprenant une pluralité de stations radio (AP2, ZMS1, ZMS2, MS3, MS4, MS5, MS6),
- des moyens (M2) pour créer un message (BEACON) avec des instructions relatives à l'organisation de la communication au sein du deuxième système de radiocommunication (KOM2), au moins une station radio (AP2, ZMS1, ZMS2) du deuxième système de radiocommunication (KOM2) recevant l'instruction, par le message (BEACON) créé par le dispositif (BS1), de retransmettre à d'autres stations radio (MS3, MS4, MS5, MS6) du deuxième système de radiocommunication (KOM2) des informations (ANNOUNCEMENT) contenues dans le message (BEACON) et concernant l'organisation de la communication au sein du deuxième système de radiocommunication (KOM2),
- des moyens (M3) pour sélectionner une partie de l'ensemble des stations radio (AP2, ZMS1, ZMS2) du deuxième système de radiocommunication (KOM2),
- des moyens (M4) pour envoyer le message (BEACON) à la partie de l'ensemble des stations radio (AP2, ZMS1, ZMS2) du deuxième système de radiocommunication (KOM2).

12. Dispositif (BS1) selon la revendication 11, **caractérisé en ce que** les instructions du message (BEACON) créé par le dispositif (BS1) concernent
- des consignes de temps pour la communication au sein du deuxième système de radiocommunication (KOM2) et/ou
- au moins une tranche de temps (ZENTRAL) pour la communication au sein du deuxième système de radiocommunication (KOM2) sur la base d'un procédé d'accès radio à commande centralisée et au moins une tranche de temps (DEZENTRAL) pour la communication au sein du deuxième système de radiocommunication (KOM2) sur la base d'un procédé d'accès radio à commande décentralisée.

13. Dispositif (BS1) selon la revendication 11 ou 12, **caractérisé en ce qu'**un instant pour l'émission des informations (ANNOUNCEMENT) concernant l'organisation est communiqué à l'au moins une station radio (AP2, ZMS1, ZMS2) par le message (BEACON) créé par le dispositif (BS1) .
